# EUROPEAN PATENT SPECIFICATION

(11) **EP 0 393 995 B1**
(45) Date of publication and mention of the grant of the patent: **14.06.1995**
(21) Application number: 90304118.4
(22) Date of filing: 17.04.1990
(51) Int. Cl.: G11B 15/467

(54) **Automatic tracking systems for magnetic recording and/or reproducing apparatus**
Automatisches Spurnachführungsverfahren für magnetische Aufzeichnungs- und/oder Wiedergabegeräte
Systèmes automatiques de suivi de piste pour appareils d'enregistrement et/ou de reproduction magnétique

(30) Priority: 17.04.1989 JP 96898/89
(43) Date of publication of application: 24.10.1990
(73) Proprietor: SONY CORPORATION, Tokyo 141 (JP)
(72) Inventor: Takayanagi, Nobuharu, c/o Patents Division, Shinagawa-ku, Tokyo 141 (JP)
(74) Representative: Cotter, Ivan John

(56) References cited:
- EP-A- 0 103 463
- EP-A- 0 181 186
- EP-A- 0 307 586
- GB-A- 2 068 599

## Description

This invention relates to automatic tracking systems for magnetic recording and/or reproducing apparatus, such as, for example, video tape recorders (VTRs) and pulse code modulated (PCM) audio signal recorders.

In modern VTRs, automatic tracking systems provide automatic adjustment of tracking without requiring manual operation. In a typical automatic tracking system, the speed of a capstan motor is controlled so that a control signal recorded in a control track on a magnetic tape can be maintained in a predetermined phase relationship relative to a rotary drum. In this way, the scan start time of a magnetic head is controlled to correspond to that on recording to assure reproduction of a well adjusted video image.

The ideal reproduced control signal has a symmetrical waveform with respect to a centre line and has a peak signal level. When such an ideally reproduced control signal can be obtained, the automatic tracking control can be done very efficiently by adjusting the capstan motor speed to obtain the peak level of the control signal, so adjusting the phase relationship between the magnetic head and the control track to obtain optimum video image reproduction.

However, in practice it is not possible to obtain an ideally reproduced control signal, due to the tolerances involved in tape drive systems and rotary heads, which tolerances necessarily cause slight fluctuation of the oblique angle of a scanning trace of the magnetic head, or meandering of the scanning trace. Such tolerances cause distortion of the reproduced control signal, which makes it difficult to detect the optimum phase relationship between the magnetic head and the recording tracks on the magnetic tape.

In a typical case, a reproduced control signal has an asymmetrical waveform with respect to the peak level of the control signal, or has a multi-peak waveform. When a multi-peak waveform control signal is reproduced, the automatic tracking system selects one of the peaks for adjusting the phase relationship between the magnetic head and the tape track. In contrast to this, it has been found that by manual adjustment, improved fine reproduction of the video image can be obtained at a phase relationship intermediate between the points where the peak level of the control signal is obtained. Therefore, known automatic tracking systems fail to provide optimum tracking adjustment. Additionally, in a case where an asymmetrical waveform control signal is produced, an automatic tracking control system adjusts the phase relationship between the magnetic head and the tape track to a point where the maximum level of the control signal is obtained, although this point is offset from the centre line where the optimum video image reproduction performance can be obtained. In this case, jitter causes the phase relationship to shift, and the reproduced signal level tends to drop rapidly, causing substantial degradation of the reproduced video image.

GB-A-2 068 559 discloses a helical scan magnetic tape reproducing apparatus in which the magnetic heads are mounted on bimorph actuators and are periodically deflected. The head output envelope is detected and sampled, and an appropriate head position derived from the sampled envelope values.

According to the present invention there is provided a magnetic reproducing apparatus comprising:
a rotary head drum assembly carrying a plurality of magnetic heads for reproducing information recorded on a recording track of a magnetic recording medium;
a drive system for feeding said magnetic recording medium over said rotary head drum assembly;
first means, associated with said drive system, for controlling a feeding speed of said magnetic recording medium for adjusting a phase relationship between said magnetic heads and said recording track to a predetermined phase relationship;
second means, cooperating with said first means, for periodically varying said predetermined phase relationship by a predetermined magnitude so that the phase relationship between said magnetic heads and said recording track is periodically shifted;
third means for monitoring the level of a signal reproduced by each of said magnetic heads and sampling each signal level at every occurrence of a predetermined sampling timing; and
fourth means for processing a predetermined number of sampled signal levels for deriving a centre of integration thereof with respect to each of said magnetic heads for deriving an optimum phase relationship with respect to corresponding magnetic heads;
characterised in that said fourth means is operable to set said predetermined phase relationship on the basis of a weighted combination of said optimum phase relationships derived with respect to each of said magnetic heads.

An embodiment of automatic tracking system for a magnetic recording and/or reproducing apparatus, and according to the present invention, is provided with means for varying the phase relationship between a magnetic head and a track, and for monitoring levels of signals reproduced by a magnetic head at various phase relationships, and means for detecting an optimum point which is a centre of reproduced signal levels. The automatic tracking system may further include means for controlling a tape feed speed so as to establish a phase relationship of the magnetic head and the recording track, which corresponds to an optimum point.

The invention will now be described by way of example with reference to the accompanying drawings, throughout which like parts are referred to by like references, and in which:
Figure 1 is a block diagram of an embodiment of automatic tracking system for a magnetic recording and/or reproducing apparatus, and according to the present invention;
Figure 2 is a chart showing a waveform of a signal produced in the embodiment of Figure 1;
Figure 3 is a flowchart showing steps of signal processing in a system controller of Figure 1;
Figures 4 and 5 are diagrams showing the relationship between a scanning trace of a magnetic head and a recording track;
Figure 6 is a chart showing the relationship between an overlapping area of the scanning trace and the recording track, and the phase relationship between a magnetic head and the recording track;
Figures 7, 8 and 9 are diagrams showing various overlapping relationships of the scanning trace and the recording track;
Figure 10 is a chart showing a relationship between an overlapping area of the scanning trace and the recording track, and the phase relationship between the magnetic head and the recording track; and
Figures 11, 12 and 13 are diagrams showing various overlapping relationships of the scanning trace and the recording track.

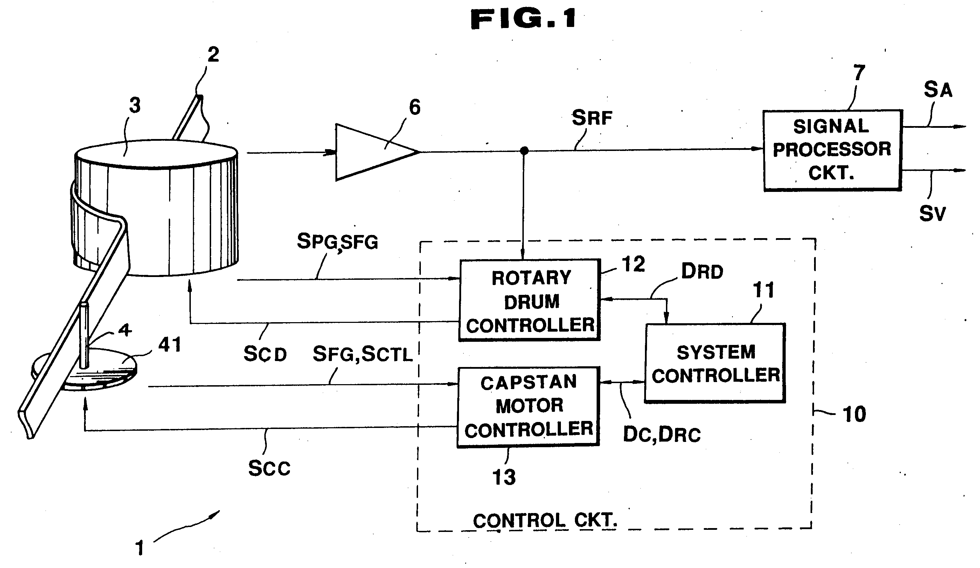

Referring to Figure 1, in the embodiment, the magnetic tape recording and/or reproducing apparatus 1 comprises a VTR which records and/or reproduces information related to, for example, a video movie, that is, a video signal and an associated audio signal in combination. Although the automatic tracking system will be described as incorporated in such a VTR, the invention is applicable to various types of oblique track type or rotary head type information recording apparatus, such as a PCM audio signal recorder.

The apparatus 1 has a rotary head drum 3, on which a magnetic tape 2 is wrapped. A capstan 41 is associated with the tape 2 to transmit driving torque from a capstan motor 4, so that the tape 2 can be fed over the drum 3 at a controlled speed determined by the capstan motor speed. The drum 3 carries a plurality of magnetic heads for video recording and/or reproduction and audio recording and/or reproduction. When the apparatus 1 operates for reproduction, a reproduced signal SRF is fed from the magnetic heads to a signal processor circuit 7 via an amplifier 6. The signal processor circuit 7 processes the reproduced signal SRF to derive a video signal SV and an audio signal SA.

A control circuit 10 includes a system controller 11, a rotary drum controller 12 and a capstan motor controller 13. The controllers 12 and 13 are cooperatively controlled by the system controller 11 for adjusting the phase relationship between the magnetic head on the drum 3 and the recording track on the tape 2 for fine tracking.

For this, the rotary drum controller 12 receives a reference pulse signal SFG indicative of a predetermined reference position of the drum 3 and a position pulse signal SPG indicative of predetermined angular displacements of the drum 3. Both these signals are derived from the drum 3 for forming a rotary head servo network. The rotary drum controller 12 also receives a switching pulse signal from the system controller 11. The rotary drum controller 12 processes the signals SFG and SPG, and the switching pulse signal in a known manner to control rotational driving of the drum 3. As is well known, the rotary head network is locked in the desired rotational state of the drum 3 for establishing a servo locked state for steady driving of the drum 3. On the other hand, when the servo locked state is released, the rotary drum controller 12 detects the servo lock released state, and supplies a servo lock released indicative signal DRD to the system controller 11.

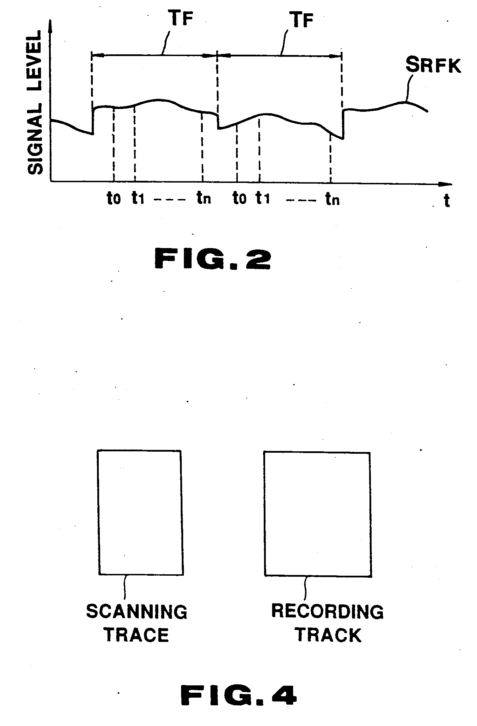

Furthermore, the rotary drum controller 12 detects the envelope of the reproduced signal SRF to produce a detected signal SRFK as shown in Figure 2. The rotary drum controller 12 monitors the signal level of the detected signal SRFK for sampling signal level data at predetermined sampling times t₀, t₁, ... tₙ determined with respect to the reference signal SFG and the position signal SPG. The rotary drum controller 12 transfers the sampled signal level data of each magnetic head for each field TF to the system controller 11 at a predetermined time.

The system controller 11 receives the sampled signal level data of each magnetic head and derives a sum value of the sampled level data for each field, and thus derives integrated signal level data of each magnetic head. This permits detection of the signal level of the reproduced signal SRF with high precision.

On the other hand, the capstan motor controller 13 controls the driving speed of the capstan motor in terms of the reference signal SFG for synchronization of the capstan speed with rotation of the drum 3. For this, the capstan motor controller 13 receives a capstan control signal DC from the system controller 11. The capstan motor controller 13 thus adjust the capstan speed so that a predetermined phase relationship between the switching pulse signal and a control signal SCTL can be established. Therefore, the phase relationship of the control signal SCTL stored in the control track of the tape 2, and that of the magnetic head in the drum 3 can be maintained at a predetermined value determined by the control signal DC. Therefore, by varying the control signal DC, the phase relationship can be varied.

The capstan motor controller 13 detects the establishment of a phase relationship coincident with that represented by the control signal DC to supply a capstan motor locked state indicative signal DRC to the system controller 11.

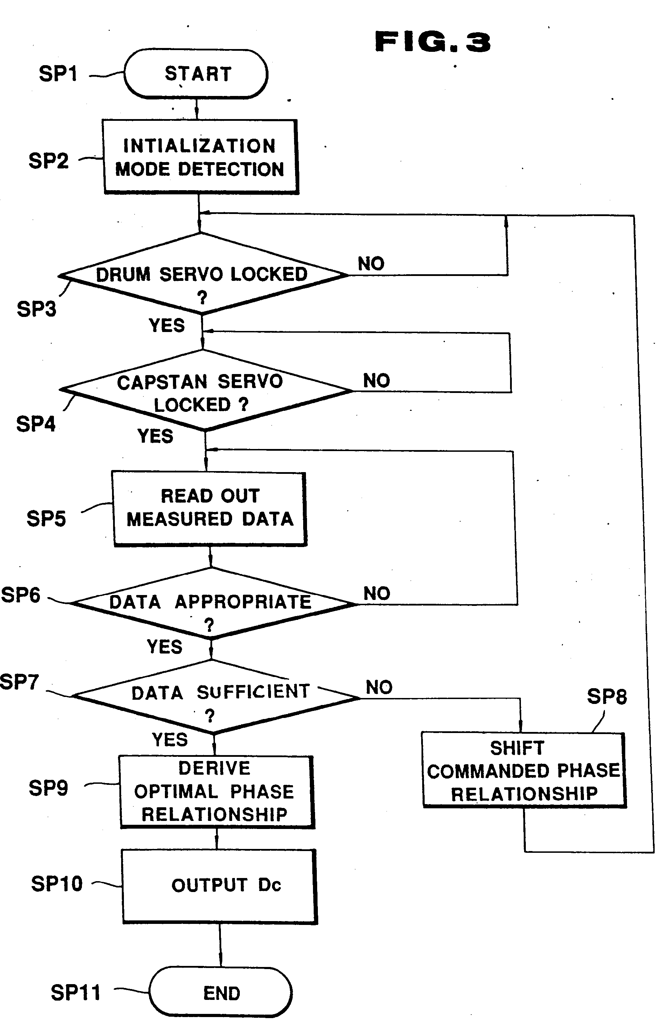

The system controller 11 is responsive to the initiation of reproduction mode operation to perform the process illustrated in Figure 3 for detecting an optimum phase relationship between the recorded track on the tape 2 to be reproduced and the magnetic head of the drum 3.

The system controller 11 enters a mode of operation for determining the optimum phase relationship, as shown in Figure 3, at a step SP1. Immediately after starting the process at the step SP1, initial setting is performed at a step SP2. In step SP2, control signals are supplied to the rotary drum controller 12 and the capstan motor controller 13 for initialization of the phase relationship. This initialization is performed by setting the phase relationship of the drum 3 and the recording track at a position corresponding to a neutral position of a manually operable tracking control.

In addition, the system controller 11 detects the recording mode of the tape 2 at the step SP2. Namely, in this process, discrimination is made between hi-fi mode recording which records audio signals with a deeper phase recording on a video recording track, and normal mode recording which records audio signals only on an audio track.

At a step SP3, a check is performed as to whether the rotary drum servo network is locked, by checking for the presence of the rotary drum servo lock released state indicative signal DRD. As long as the signal DRD is present the answer at the step SP3 is NO, and the checking process is repeatedly and cyclically performed awaiting the establishment of the locked state of the rotary drum servo. In response to termination of the rotary drum servo lock released state indicative signal DRD, the process goes to a step spin. At the step spin, a check is performed as to whether the capstan motor servo network is locked or not by checking the capstan motor servo locked state indicative signal DRC. At this step SP4, the presence of the signal DRD is checked to determine whether the phase relationship between the magnetic head and the recording track as commanded by the capstan control signal DC is established or not. Similarly to the step SP3, the process in the step SP4 is repeated until presence of the capstan motor servo locked state indicative signal DRC is detected.

After detecting the presence of the capstan motor servo locked state indicative signal DRC at the step SP4, the sampled signal level data of each magnetic head, sampled over four fields by the rotary drum controller 12, is read out at a step SP5. By this, the signal level of the reproduced signal SRF of the locked state of the rotary drum servo and the capstan motor servo networks can be obtained. Therefore, at a step SP6, the read out sampled signal level data is analyzed for discriminating whether the data obtained is appropriate for use in determination of the phase relationship between the magnetic head and the recording track on the magnetic tape. Discrimination is performed by comparing signal level data at respective times t₀, t₁, ... tₙ of each magnetic head over four fields, and by checking whether the difference of the signal level over four fields is within a predetermined range. When the difference in the signal level is out of the predetermined range due to signal drop-out in reproduction of the recorded information, the process returns to the step SP5 for obtaining fresh data for four fields. On the other hand, if the difference of the signal level as checked at the step SP6 is within the predetermined range, a sum value of the signal levels at respective times t₀, t₁, ... tₙ of the reproduced signal SRF reproduced by each magnetic head over four fields is derived at the step SP6. Subsequently, the derived sum values are temporarily stored in a memory. Then, at a step SP7, a check is performed to see whether the number of sum values stored in the memory is sufficient for derivation of the phase relationship.

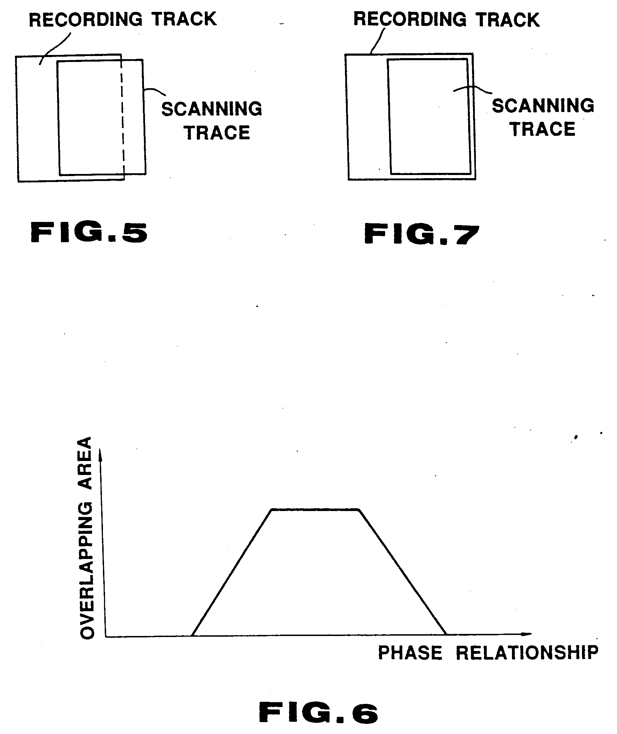

As long as the number of the stored sum values in the memory is smaller than a predetermined number which is required for accurately determining the phase relationship, the process goes to a step SP8. At the step SP8, the phase relationship is shifted in an advancing direction for a given magnitude and supplies the capstan control signal DC for causing variation of the phase relationship between the magnetic head and the recording track on the tape 2. By shifting the phase relationship the overlapping magnitude of the scanning track of the magnetic head of Figure 4 relative to the recording track of Figure 4 can be varied as shown in Figure 5. After commanding shifting of the phase relationship, the process returns to the step SP3. As will be appreciated herefrom, the steps SP3 to SP8 are repeatedly performed until the number of the stored sum values reaches the predetermined number. During this process, when the phase relationship is advanced to a predetermined maximum advance magnitude, then, the process in the step SP8 is switched to retard the phase relationship towards a predetermined maximum retarding magnitude. When the number of the stored sum values reaches the predetermined number, the process goes to a step SP9 for deriving the phase relationship.

The maximum advance and retard magnitudes define a range of variation in the phase relationship. The variation range is set in a range corresponding to an adjusting range of a manually operable tracking control without causing substantial degradation of the reproduced video image. Therefore, during the process of determination of the phase relationship, no significant degradation of the video image is caused.

In the process of the step SP9, an optimum phase relationship point ϑ_{H} is determined by deriving an integration centre according to the following process.

With respect to each magnetic head, the optimum phase relationship point ϑ_{H} is derived according to the following equation:${\text{ϑ}}_{\text{H}} \text{=} \frac{\text{Σ kF(k)}}{\text{Σ k}}$
where k is the phase relationship shifted from the neutral or reference phase relationship; and
F(k) is a sum value obtained at each phase relationship.

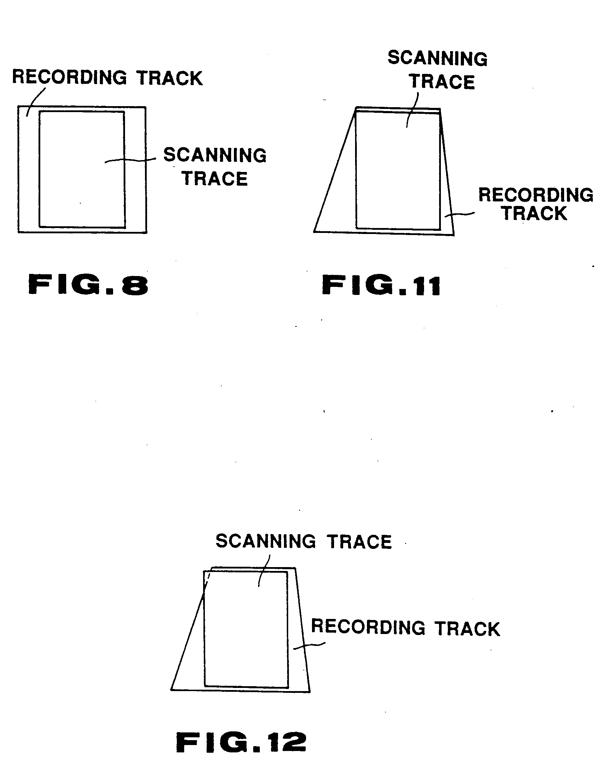

In the simplified example of Figure 4, if the scanning trace of the magnetic head is smaller than the recording track, the overlapping area of the recording track and the scanning trace will vary as illustrated in Figure 6. In general, the signal level of the reproduced signal SRF is variable depending upon the overlap magnitude of the recording track and the trace of the magnetic head. Therefore, as shown in Figure 7, since known automatic tracking systems adjust the scanning trace orientation so that the scanning trace is fully overlapped with the side edge of the recording track, a slight off-set of the scanning path in a direction for reducing the overlapping magnitude may cause substantial variation of the signal level. On the other hand, with this embodiment, since the scanning trace is generally oriented substantially at the centre of the recording track, as shown in Figure 8, slight fluctuation will not affect the reproduced signal level. Therefore, abrupt variation of the signal level of the reproduced signal will not be caused. Accordingly, high accuracy phase relationship adjustment can be realized.

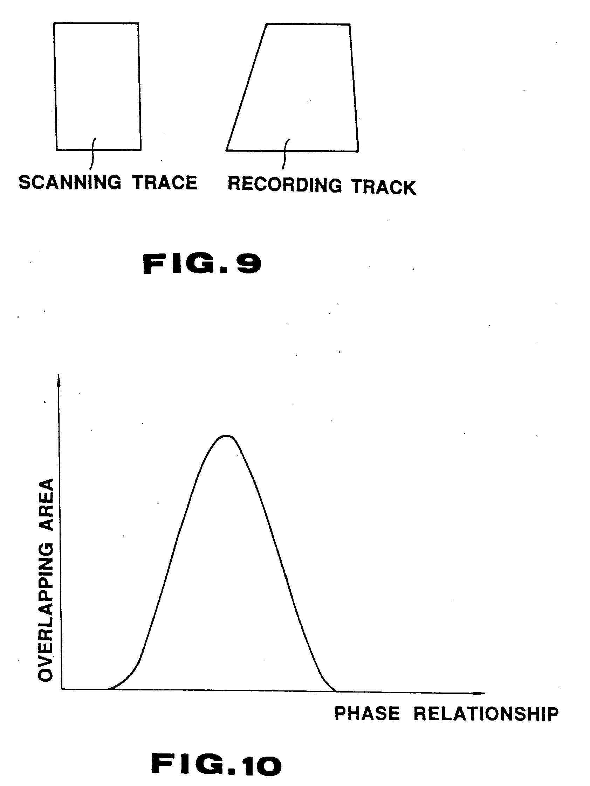

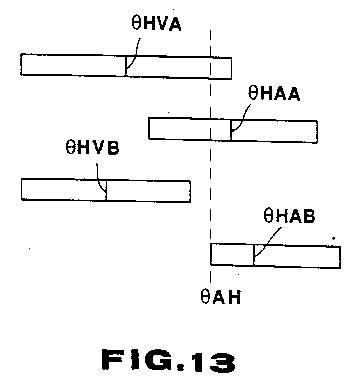

For example, if the oblique angle of the scanning trace of the magnetic head is slightly varied from the oblique angle of the recording track, the optimum phase relationship point can be derived according to the process set out above with respect to Figure 3. On the other hand, when the configuration of the scanning trace of the magnetic head and the recording track do not match each other due to meandering of the scanning trace and/or the recording track, as shown in Figures 9 and 10, for example, variation of the phase relationship in the advancing or retarding directions becomes asymmetrical with respect to the point at which the peak level of the reproduced signal is obtained. In this case, the known automatic tracking system adjusts the phase relationship for maximum overlapping area, so that the upper edge of the scanning trace coincides with the upper edge of the recording track, which has been graphically represented as a trapezoidal shape for simplification, as shown in Figure 11. In this case, slight off-set of the scanning trace relative to the recording track may cause substantial and abrupt variation of the reproduced signal level.

In contrast to this, with the embodiment, the scanning trace is so oriented as to establish the optimum phase relationship according to the optimum phase relation point ϑ_{H} as set forth above. By positioning the scanning trace at the optimum phase relation point, the orientation of the scanning trace with respect to the recording track assumes a slightly off-set position to the left from an orientation where the maximum overlapping area is obtained, as shown in Figure 12. In this position, the overlapping area will not cause substantial variation even when the position of the scanning trace fluctuates in relation to the recording track. Therefore, even in this case, the signal level of the reproduced signal remains stable.

In the case of hi-fi mode video tape, the optimum phase relationship ϑ_{HVA} and ϑ_{HVB} for the magnetic head for reproducing video signals and the optimum phase relationships ϑ_{HAA} and ϑ_{HAB} for the magnetic head for reproducing audio signals can be differentiated from each other, as shown in Figure 12. The difference in the optimum phase relationships may represent a measure of the differences between the VTR used for reproducing the recorded information and the VTR used to record the information. Namely, when the difference is within a predetermined range, it indicates that the video and audio reproducing heads of the reproducing VTR are positioned so as to substantially correspond to the position of the VTR recorder used for recording the video and audio information. In this case, the optimum phase relationship ϑ_{AH} may be derived through the following equation:${\text{ϑ}}_{\text{AH}} {\text{= ϑ}}_{\text{HVA}} {\text{+ ϑ}}_{\text{HVB}} {\text{+ 3 x {(ϑ}}_{\text{HAA}} {\text{+ ϑ}}_{\text{HAB}} \text{)/2} /5}$

As will be appreciated from Equation (2), arithmetic operation is not performed for simply deriving an average value, but is performed to introduce a weighting factor. As can be seen from Equation (2), the optimum phase relationship ϑ_{AH} will have greater weight for audio signal reproduction.

On the other hand, if the difference is out of the predetermined range, this shows low compatibility between the reproducing VTR and the recording VTR. In this case, since greater weight is given to the quality of audio reproduction, the optimum phase relationship ϑ_{AH} is determined so that the phase relationships ϑ_{HVA} and ϑ_{HVB} of the video reproducing head are adjusted within a range in which the phase relationships ϑ_{HAA} and ϑ_{HAB} of the audio reproduction head can be maintained within a given range.

In practice, it is not possible to avoid tolerance in arrangement of the magnetic heads. Therefore, the optimum phase relationship for one of the magnetic heads is not necessarily the optimum phase relationship for the other magnetic head. The greater the difference between the recording VTR and the reproducing VTR the greater the difference between the optimum phase relationships between individual magnetic heads in the reproducing VTR. Therefore, according to the preferred process of determination of the optimum phase relationship, the point is determined so as to achieve the optimum balance of the phase relationships of the individual magnetic heads. By this the optimum overall phase relationship for the VTR can be obtained.

In contrast to the above, the optimum phase relationship ϑ_{AH} in the normal mode magnetic tape reproduction can be derived according to the following equation:${\text{ϑ}}_{\text{AH}} {\text{= (ϑ}}_{\text{HVA}} {\text{+ ϑ}}_{\text{HVB}} \text{)/2}$

As can be appreciated herefrom, the embodiment derives the optimum phase taking not only the difference of optimum phase relationships derived with respect to respective magnetic heads into account, but also the recording mode of the information. This assures good tracking performance.

Returning to Figure 3, after deriving the optimum phase relationship ϑ_{AH} by the above process, the capstan motor control signal DC is supplied at a step SP10. As set forth, the capstan motor controller 13 then adjusts the capstan speed for establishing the phase relationship corresponding to the optimum phase relationship ϑ_{AM} as commanded by the capstan motor control signal DC. After supplying the capstan motor control signal at the step SP10, the process EXITS at a step SP11.

## Claims

1. A magnetic reproducing apparatus (1) comprising:
a rotary head drum assembly (3) carrying a plurality of magnetic heads for reproducing information recorded on a recording track of a magnetic recording medium (2);
a drive system (4, 41) for feeding said magnetic recording medium (2) over said rotary head drum assembly;
first means (13), associated with said drive system (4, 41), for controlling a feeding speed of said magnetic recording medium (2) for adjusting a phase relationship between said magnetic heads and said recording track to a predetermined phase relationship;
second means (11), cooperating with said first means (13), for periodically varying said predetermined phase relationship by a predetermined magnitude so that the phase relationship between said magnetic heads and said recording track is periodically shifted;
third means (12) for monitoring the level of a signal reproduced by each of said magnetic heads and sampling each signal level at every occurrence of a predetermined sampling timing; and
fourth means (11) for processing a predetermined number of sampled signal levels for deriving a centre of integration thereof with respect to each of said magnetic heads for deriving an optimum phase relationship with respect to corresponding magnetic heads;
characterised in that said fourth means is operable to set said predetermined phase relationship on the basis of a weighted combination of said optimum phase relationships derived with respect to each of said magnetic heads.

2. Apparatus (1) according to claim 1 wherein said second means (11) is responsive to initiation of reproducing operation for causing variation of said predetermined phase relationship until said predetermined number of sampled signal levels is obtained by said fourth means (11).

3. Apparatus (1) according to claim 2 wherein said second means (11) varies said predetermined phase relationship within a predetermined range defined by a maximum advance point and a maximum retard point, which maximum advance and retard points are determined at points where no substantial variation of the reproduced signal level is caused.

4. Apparatus (1) according to claim 1 which comprises a video tape recorder (1) provided with a rotary head drum assembly (3) including at least one video signal reproducing head and at least one audio signal reproducing head.

5. Apparatus (1) according to claim 4 wherein said magnetic recording medium (2) comprises a video tape (2) having a video recording track on which an audio signal is additionally recorded by way of deeper phase recording, and said fourth means (11) gives a greater weighting factor to the phase relationship derived with respect to said audio signal reproducing head.

6. Apparatus (1) according to claim 1 wherein said third means (12) checks signal level differences with adjacent sampling times to detect the quality of sampled signal level data for rejecting sampled signal level data when said difference is greater than a predetermined threshold value.

## Patentansprüche

1. Magnetische Wiedergabevorrichtung (1), mit:
einer Drehkopftrommelanordnung (3), die mehrere Magnetköpfe trägt, um eine Information wiederzugeben, die auf einer Aufzeichnungsspur eines magnetischen Aufzeichnungsmediums (2) aufgezeichnet ist;
einem Antriebssystem (4, 41) zur Zufuhr des magnetischen Aufzeichnungsmediums (2) über die Drehkopftrommelanordnung;
einer ersten Einrichtung (13), die mit dem Antriebssystem (4, 41) in Verbindung steht, um eine Zufuhrgeschwindigkeit des magnetischen Aufzeichnungsmediums (2) zu steuern, um eine Phasenlage zwischen den Magnetköpfen und der Aufzeichnungsspur auf eine vorgegebene Phasenlage einzujustieren;
einer zweiten Einrichtung (11), die mit der ersten Einrichtung (13) zusammenarbeitet, um periodisch die vorgegebene Phasenlage um eine vorgegebene Größe zu variieren, so daß die Phasenlage zwischen den Magnetköpfen und der Aufzeichnungsspur periodisch verschoben wird;
einer dritten Einrichtung (12), um den Pegel eines Signals zu überwachen, das durch jeden der Magnetköpfe wiedergegeben wird, und um jeden Signalpegel bei jedem Vorkommnis eines vorgegebenen Abtastzeitpunktes abzutasten; und
einer vierten Einrichtung, um eine vorgegebene Anzahl von abgetasteten Signalpegeln zu verarbeiten, um eine integrale Spitze daraus in bezug auf jeden der Magnetköpfe abzuleiten, um eine optimale Phasenlage in bezug auf die entsprechenden Magnetköpfe herzuleiten;
gekennzeichnet dadurch, daß die vierte Einrichtung die vorgegebene Phasenlage auf der Basis einer gewichteten Kombination der optimalen Phasenlagen einstellen kann, die in bezug auf jeden der Magnetköpfe hergeleitet werden.

2. Vorrichtung (1) nach Anspruch 1, wobei die zweite Einrichtung (11) in Abhängigkeit von einer Initialisierung des Wiedergabebetriebs eine Variation der vorgegebenen Phasenlage veranlaßt, bis die vorgegebene Anzahl der abgetasteten Signalpegel durch die vierte Einrichtung (11) erhalten wird.

3. Vorrichtung (1) nach Anspruch 2, wobei die zweite Einrichtung (11) die vorgegebene Phasenlage innerhalb eines vorgegebenen Bereichs variiert, der durch einen maximalen Voreilpunkt und einen maximalen Verzögerungspunkt definiert ist, wobei der maximale Voreil- und Verzögerungspunkt an Punkten festgelegt wird, wo keine wesentliche Variation des aufgezeichneten Signalpegels verursacht wird.

4. Vorrichtung (1) nach Anspruch 1, die einen Videobandrecorder (1) aufweist, der mit einer Drehkopftrommeleinrichtung (3) versehen ist, die zumindest einen Videosignal-Wiedergabekopf und zumindest einen Audiosignal-Wiedergabekopf aufweist.

5. Vorrichtung (1) nach Anspruch 4, wobei das magnetische Aufzeichnungsmedium (2) ein Videoband (2) aufweist, das eine Videoaufzeichnungsspur aufweist, auf der ein Audiosignal zusätzlich durch eine tiefer liegende Phasenaufzeichnungspur aufgezeichnet ist, und wobei die vierte Einrichtung (11) einen größeren Wichtungsfaktor der Phasenlage zuordnet, die in bezug auf diesen Audiosignal-Wiedergabekopf hergeleitet wird.

6. Vorrichtung (1) nach Anspruch 1, wobei die dritte Einrichtung (12) Signalpegelunterschiede gegenüber benachbarten Abtastzeiten prüft, um die Qualität der abgetasteten Signalpegeldaten zu ermitteln, um die abgetasteten Signalpegeldaten zurückzuweisen, wenn die Differenz größer als ein vorgegebener Schwellenwert ist.

## Revendications

1. Appareil de reproduction magnétique (1), comprenant:
- un ensemble tournant à tambour et têtes (3) portant une pluralité de têtes magnétiques pour reproduire des informations enregistrées sur une piste d'enregistrement d'un support d'enregistrement magnétique (2);
- un système d'entraînement (4, 41) pour faire défiler ledit support d'enregistrement magnétique (2) sur ledit ensemble tournant à tambour et têtes;
- des premiers moyens (13) associés audit système d'entraînement (4, 41) pour commander la vitesse de défilement dudit support d'enregistrement magnétique (2) pour régler une relation de phase entre lesdites têtes magnétiques et ladite piste d'enregistrement à une relation de phase prédéterminée;
- des deuxièmes moyens (11) coopérant avec lesdits premiers moyens (13) pour faire varier pérriodiquement ladite relation de phase prédétermiéne d'une amplitude prédéterminée de manière que la relation de phase entre lesdites têtes magnétiques et ladite piste d'enregistrement soit décalée périodiquement:
- des troisième moyens (12) pour surveiller le niveau du signal reproduit par chacune desdites têtes magnétiques et échantillonner chaque niveau du signal à chaque occurence d'un instant d'échantillonnage prédéterminé; et
- des quatrièmes moyens (11) pour traiter un nombre prédéterminé de niveaux échantillonnés du signal pour obtenir un centre d'intégration de ceux-ci par rapport à chacune desdites têtes magnétiques pour obtenir une relation de phase optimale par rapport aux têtes magnétiques correspondantes,
caractérisé en ce que lesdits quatrièmes moyens sont actionnables pour régler ladite relation de phase prédéterminée sur la base d'une combinaison pondérée desdites relations de phase optimale obtenues par rapport à chacune desdites têtes magnétiques.

2. Appareil (1) selon la revendication 1, dans lequel lesdits deuxièmes moyens (11) sont sensibles au déclenchement d'une opération de reproduction pour provoquer la variation de ladite relation de phase prédéterminée jusqu'à ce que ledit nombre prédéterminé de niveaux échantillonnés du signal soit obtenu par lesdits quatrième moyens (11).

3. Appareil (1) selon la revendication 2, dans lequel lesdits deuxièmes moyens (11) font varier ladite relation de phase prédéterminée dans un intervalle prédéterminé défini par un point d'avance maximale et un point de retard maximal, lesquels points d'avance et de retard sont déterminés en des points où aucune variation sensible du niveau du signal reproduit n'est provoquée.

4. Appareil (1) selon la revendication 1, qui est constitué par un magnétoscope (1) doté d'un ensemble tournant à tambour et têtes (3) comportant au moins une tête de reproduction du signal vidéo et au moins une tête de reproduction du signal audio.

5. Appareil (1) selon la revendication 4, dans lequel ledit support d'enregistrement magnétique (2) ayant une piste d'enregistrement vidéo sur laquelle un signal audio est enregistré additionnellement au moyen d'un enregistrement de phase plus profond, et lesdits quatrièmes moyens donnent un coefficient de pondération plus grand à la relation de phase obtenue par rapport à ladite tête de reproduction du signal audio.

6. Appareil (1) selon la revendication 1, dans lequel lesdits troisièmes moyens (12) contrôlent les différences de niveau du signal avec des instants d'échantillonnage voisins pour détecter la qualité des données échantillonnées de niveau du signal pour rejeter les données échantillonnées de niveau du signal lorsque ladite différence est plus grande qu'une valeur de seuil prédéterminée.
